# EUROPEAN PATENT SPECIFICATION

(11) **EP 3 591 321 B1**
(45) Date of publication and mention of the grant of the patent: **27.04.2022**
(21) Application number: 19182754.2
(22) Date of filing: 27.06.2019
(51) Int. Cl.: F25D 23/02

(54) **ELECTRICAL APPARATUS**
ELEKTRISCHE VORRICHTUNG
APPAREIL ÉLECTRIQUE

(30) Priority: 03.07.2018 CN 201810718103
(43) Date of publication of application: 08.01.2020
(73) Proprietor: Tyco Electronics (Shanghai) Co., Ltd., Pilot Free Trade Zone Shanghai (CN)
(72) Inventor: ZHONG, Yuan, Xuhui District, Shanghai 200233 (CN); WANG, Chenxi, Xuhui District, Shanghai 200233 (CN); BIAN, Weifeng, Xuhui District, Shanghai 200233 (CN)
(74) Representative: Grünecker Patent- und Rechtsanwälte PartG mbB

(56) References cited:
- WO-A1-2017/072659
- WO-A1-2020/196974
- JP-A- H0 884 891
- US-A1- 2010 271 296
- US-A1- 2017 048 457

## Description

### BACKGROUND OF THE INVENTION

### Field of the Invention

Embodiments and certain non-claimed examples of the present disclosure relate to an electrical apparatus, and in particular to an electrical apparatus enabling wireless power supply between parts which pivot relative to each other.

### Description of the Related Art

In electrical appliances, in particular household appliances, two parts having a relative pivoting movement relationship are generally connected by a hinge device. Because of a need to communicate between the parts, such as a need to transmit power between the parts, wires are required to pass through hinge holes to transmit power from one end of the hinge device to the other.

However, due to the need to pass the wires through the hinge hole, this arrangement complicates assembly and disassembly processes of the electrical appliances; due to a limited size of the hinge hole, this arrangement makes the hinge hole not accommodate more wires, and therefore the number of power consumption devices is limited; and, since the wire passing through the hinge is driven to reciprocate by the hinge during the pivoting movement, this arrangement is liable to cause fatigue of the wire to fail, greatly reducing reliability of power transmission.

Therefore, there is a need for an electrical apparatus that may solve the above problems.

WO 2017/072659 A1 discloses a wireless power transmission device including: a transmitting coil assembly having a first magnetic core and transmitting coil windings wound around the first magnetic core; and a receiving coil assembly having a second magnetic core and a receiving coil winding wound around the second magnetic core. The first magnetic core includes a U-shaped body portion and first and second pillar portions extending at both ends of the U-shaped body portion. The transmitting coil winding includes first and second transmitting coil windings wound around the first and second pillar portions respectively. The receiving coil winding wound around the second magnetic core includes first and second receiving coil windings wound around both ends of the second magnetic core. The receiving coil assembly is adapted to be interposed between the first pillar portion and the second pillar portion of the transmitting coil assembly to be electromagnetic ally coupled therewith.

US 2017/0048457 A1 discloses an imaging apparatus including a base that has a power transmitter for transmitting power wirelessly; and a movable unit that has a power receiver for receiving power wirelessly from the power transmitter, an imager operating on the basis of power received by the power receiver, and a first communicator transmitting image information acquired by the imager wirelessly. The movable unit is movable relative to the base.

JP H08 84891 A relates to a washing machine comprising a main body and a lid that is supported rotatably by a hinge mechanism comprising a power receiving coil and a power transmission coil for wirelessly supporting power to the lid.

US 2010/271296 A1 discloses a user interface, e.g. a screen, powered via an inductive coupling and connected to a main body via hinges.

### SUMMARY OF THE INVENTION

An object of the present disclosure is to solve at least one of the above and other problems and defects existing in the prior arts.

According to an exemplary embodiment of an aspect of the present disclosure, there is provided an electrical apparatus wherein electromagnetic coupling is formed between a first coil mounted on a main body and a second coil mounted on a pivotal part, realizing wireless power supply between the main body and the pivotal part.

The first coil at least partly passes through the second coil to form electromagnetic coupling between the first coil and the second coil, so that power is wirelessly supplied between the main body and the pivot part. The pivotal part is mounted on the main body by a hinge device. A relative position of the first coil and the second coil in a pivot axis of the hinge device remains unchanged during a pivoting movement of the pivotal part. Further, the electrical apparatus comprises a refrigerator, and the pivotal part comprises a refrigerator door.

According to an exemplary embodiment of the present disclosure, the pivotal device comprises: a mounting portion mounted on the main body; and an insertion portion fixed on the mounting portion, the first coil arranged in the insertion portion; and a receiving groove is provided in the pivotal part, the second coil being arranged in the receiving groove, and the insertion portion being inserted into the receiving groove.

According to an exemplary embodiment of the present disclosure, the insertion portion is constructed to be a cylinder. The hinge device further comprises a plastic body fixed in the cylinder, the first coil being fixed in the plastic body.

According to an exemplary embodiment of the present disclosure, a bearing portion is provided in the receiving groove, the second coil being fixed to the bearing portion.

According to an exemplary embodiment of the present disclosure, the first coil is acted as a transmitter coil, the second coil is acted as a receiver coil, and electromagnetic coupling is formed between the first coil and the second coil, so that power is transmitted from the main body to the pivotal part.

According to an exemplary embodiment of the present disclosure, the electrical apparatus further comprises a supporting part mounted at a position of the main body, which is engaged with a lower end of the pivotal part, and provided with a protrusion, the lower end of the pivotal part being provided with a mounting groove, and the protrusion being inserted into the mounting groove.

According to an exemplary embodiment of the present disclosure, the first coil is in a cylindrical shape and the second coil is in a hollow cylindrical shape.

Other objectives and advantages of the present disclosure will become apparent from the following description of the present disclosure when taken in conjunction with the accompanying drawings, and may give a comprehensive understanding of the present disclosure.

### BRIEF DESCRIPTION OF THE DRAWINGS

The above and other features of the present disclosure will become more apparent by describing in detail exemplary embodiments thereof with reference to the accompanying drawings, in which:
Fig. 1 is a perspective view of a main body of an electrical apparatus according to an embodiment of the present disclosure;
Fig. 2 is an enlarged view of a portion A as shown in Fig. 1;
Fig. 3 is a perspective view of a pivotal part of the electrical apparatus according to the embodiment of the present disclosure;
Fig. 4 is an enlarged view of a portion B as shown in Fig. 3;
Fig. 5 is a perspective view of the electrical apparatus according to the embodiment of the present disclosure as viewed from a direction, wherein the pivotal part as shown in Fig. 3 has been mounted on the main body as shown in Fig. 1;
Fig. 6 is an enlarged view of a portion C as shown in Fig. 5;
Fig. 7 is a perspective view of the electrical apparatus as shown in Fig. 5 as viewed from another direction;
Fig. 8 is an enlarged view of a portion D as shown in Fig. 7;
Fig. 9 is a perspective view of a main body of an electrical apparatus according to a non-claimed example;
Fig. 10 is an enlarged view of a portion E as shown in Fig. 9;
Fig. 11 is a perspective view of a pivotal part of the electrical apparatus according to a non-claimed example;
Fig. 12 is an enlarged view of a portion F as shown in Fig. 11;
Fig. 13 is a perspective view of the electrical apparatus according to the non-claimed example as viewed from a direction, wherein the pivotal part as shown in Fig. 11 has been mounted on the main body as shown in Fig. 9;
Fig. 14 is an enlarged view of a portion G as shown in Fig. 13;
Fig. 15 is a perspective view of the electrical apparatus as shown in Fig. 13 as viewed from another direction; and
Fig. 16 is an enlarged view of a portion H as shown in Fig. 15.

### DETAILED DESCRIPTION OF PREFERRED EMBODIMENTS OF THE

### INVENTION

The technical solution of the present disclosure will be described hereinafter in further detail with reference to the following embodiments, taken in conjunction with the accompanying drawings. In the specification, the same or similar reference numerals indicate the same or similar parts.

In addition, in the following detailed description, for the sake of explanation, numerous specific details are set forth in order to provide a thorough understanding of the disclosed embodiments. In other instances, well-known structures and devices are illustrated schematically in order to simplify the drawing.

According to the invention, there is provided an electrical apparatus according to claim 1.

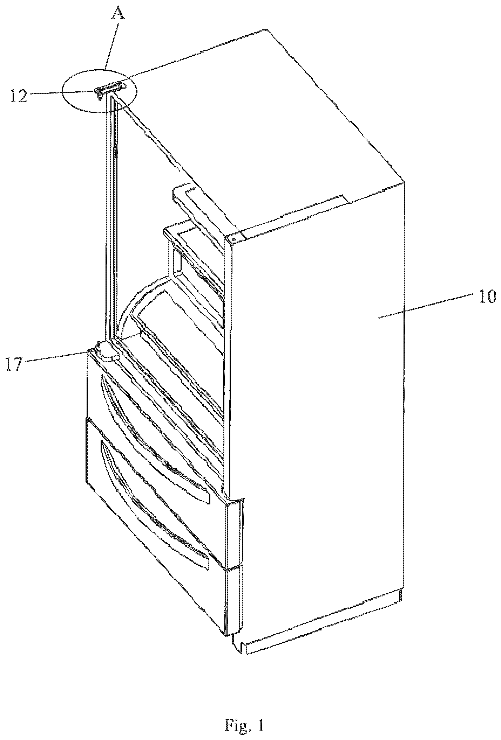

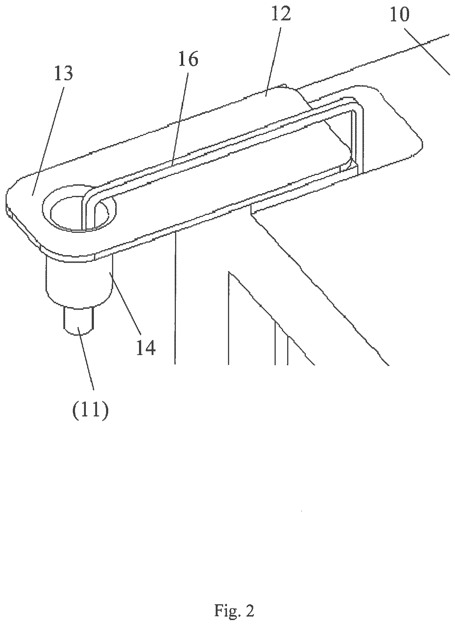

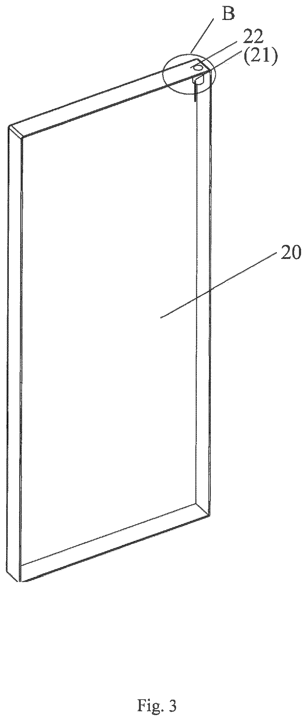

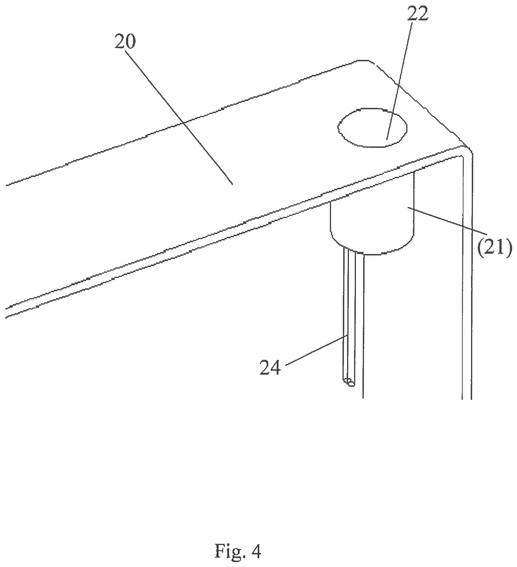

Fig. 1 is a perspective view of a main body of an electrical apparatus according to a embodiment of the present disclosure; Fig. 2 is an enlarged view of a portion A as shown in Fig. 1; Fig. 3 is a perspective view of a pivotal part of the electrical apparatus according to the embodiment of the present disclosure; and Fig. 4 is an enlarged view of a portion B as shown in Fig. 3.

As shown in Figs. 1-4, in an illustrated embodiment of the present disclosure, there is provided an electrical apparatus, comprising: a main body 10; a pivotal part 20 pivotally connected to the main body 10; a first coil 11 mounted on the main body 10; and a second coil 21 mounted on the pivotal part 20, The first coil 11 at least partly passes through the second coil 21 to form electromagnetic coupling between the first coil 11 and the second coil 21, so that power is wirelessly supplied between the main body 10 and the pivot part 20.

Further, according to the invention, the electrical apparatus comprises a refrigerator 1, and the pivotal part 20 comprises a refrigerator door which is mounted on a refrigerator main body 10 of the refrigerator by a hinge device 12. As shown in Figs. 1-4, in an illustrated embodiment of the present disclosure, the first coil 11 is acted as a transmitter coil and is in a cylindrical shape, and the second coil 21 is acted as a receiver coil and is in a hollow cylindrical shape. The transmitter coil at least partially passes through the receiver coil, and the receiver coil is pivotally moved relative to the transmitter coil about a pivot axis of the hinge device 12. In this way, power may be wirelessly transmitted from the transmitter coil to the receiver coil, thereby realizing power transmission from the refrigerator main body to the refrigerator door. In an alternative embodiment, the first coil 11 and the second coil 21 are configured to achieve signal transmission from the refrigerator door to the refrigerator main body.

As shown in Fig. 2, in an illustrated embodiment of the present disclosure, the hinge device 12 comprises: a mounting portion 13 mounted on the main body 10; and an insertion portion 14 fixed on the mounting portion 13, for example, near a free end of the mounting portion 13, the first coil 11 being arranged in the insertion portion 14. In the illustrated embodiment, the first coil 11 protrudes from the insertion portion 14. As shown in Fig. 4, a receiving groove 22 is provided on the refrigerator door, and the second coil 21 is arranged in the receiving groove 22. The insertion portion 14 of the hinge device 12 is inserted into the receiving groove 22, so that the first coil 11 at least partially passes through the second coil 21.

As shown in Fig. 2, in an illustrated embodiment of the present disclosure, the hinge device 12 further includes an electric wire(s) 16 connected from the first coil 11 (or the transmitter coil) to a control system of the refrigerator, which is located in the refrigerator main body 10. In an exemplary embodiment, the transmitter coil is adapted to receive power from the refrigerator main body via the electric wire 16 to achieve wireless transmission of power from the transmitter coil to the receiver coil.

In a further embodiment, the first coil 11 is adapted to receive a signal from a control system of the electrical apparatus via the electric wire 16 and transmit it to the second coil 21. In a further embodiment, the first coil 11 is adapted to transmit a signal received from the second coil 21 to the control system of the electrical apparatus via the electric wire 16.

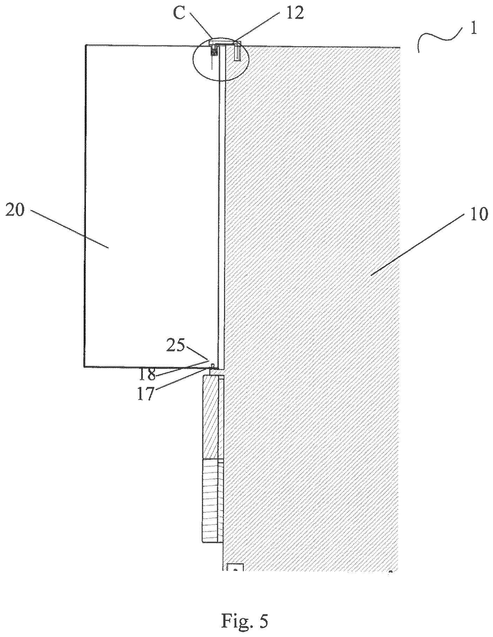

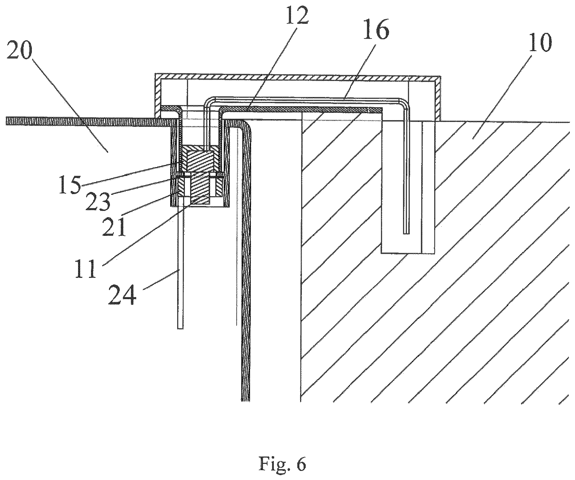

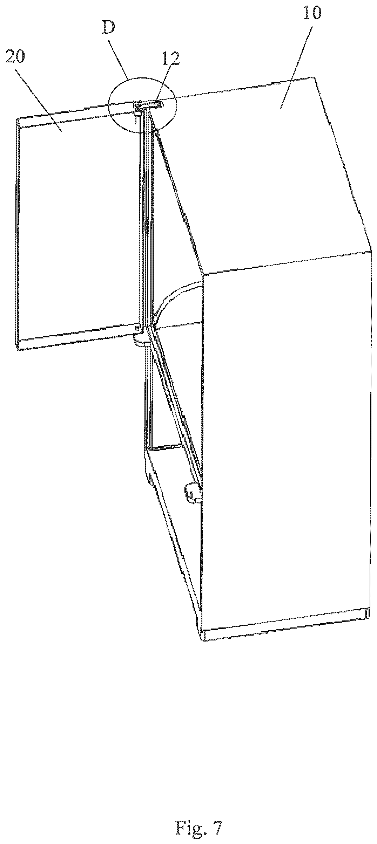

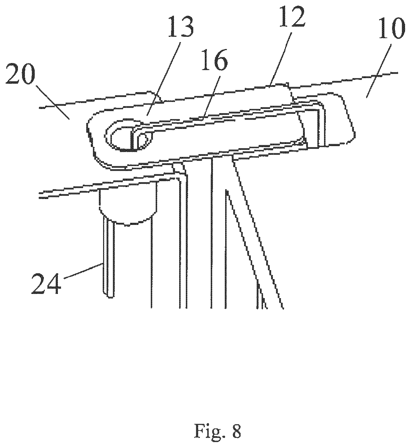

Fig. 5 is a perspective view of the electrical apparatus according to the first embodiment of the present disclosure as viewed from a direction, wherein the pivotal part as shown in Fig. 3 has been mounted on the main body as shown in Fig. 1; Fig. 6 is an enlarged view of a portion C as shown in Fig. 5; Fig. 7 is a perspective view of the electrical apparatus as shown in Fig. 5 as viewed from another direction; and Fig. 8 is an enlarged view of a portion D as shown in Fig. 7.

As shown in Fig. 2, the insertion portion 14 is constructed as a cylinder. As shown in Figs. 5-8, in an illustrated embodiment of the present disclosure, the hinge device 12 further includes a plastic body 15, in which the first coil 11 is fixed, and the plastic body 15 is fixed in the cylinder, thereby fixing the first coil 11 in the insertion portion 14. In an embodiment, the plastic body 15 may be made of a pouring sealant.

As shown in Figs. 5-8, in an illustrated embodiment of the present disclosure, a bearing portion 23 is provided in the receiving groove 22. The second coil 21 is fixed to the bearing portion 23, thereby fixing the second coil 21 in the receiving groove 22. In an embodiment, the second coil 21 is fixed by a double-sided adhesive tape.

As shown in Figs. 1, 5 and 7, in an illustrated embodiment of the present disclosure, the refrigerator further includes a supporting part 17 mounted at a position of the main body 10 which is engaged with a lower end of the refrigerator door. The supporting part 17 is provided with a protrusion 18, the lower end of the refrigerator door is correspondingly provided with a mounting groove 25, and the protrusion 18 is inserted into the mounting groove 25, so as to support the refrigerator door during pivoting movement of the refrigerator door. The hinge device 12 is further be configured to support the refrigerator door during the pivoting movement of the refrigerator door.

When the refrigerator door is mounted to the refrigerator main body 10 by the hinge device 12, a portion of the first coil 11 completely passes through the second coil 21, and the first coil 11 is overlapped with the second coil 21 at a position thereof in the pivot axis of the hinge device 12, thereby generating electromagnetic coupling therebetween. When the refrigerator door is opened or closed, the second coil 21 is pivoted relative to the first coil 11, and a relative position of the first coil 11 and the second coil 21 in the pivot axis remains unchanged throughout the pivoting movement, so that the power may be supplied between the first coil 11 and the second coil 21 in a wireless manner. In an exemplary embodiment of the present disclosure, the power may be transmitted from the refrigerator main body to the refrigerator door, and then the power may be supplied to a load(s), such as a display device, on the refrigerator door via an electric wire(s) 24 provided on the second coil 21.

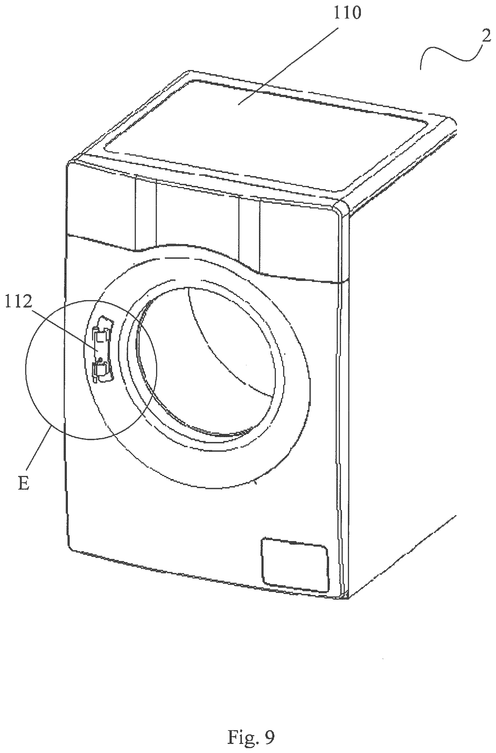

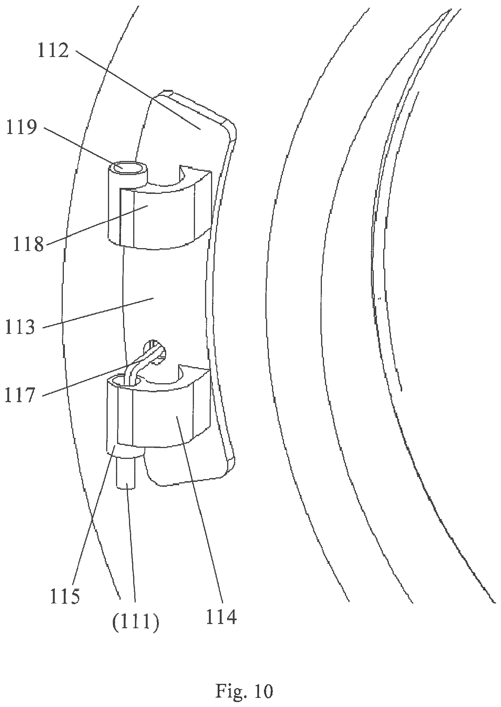

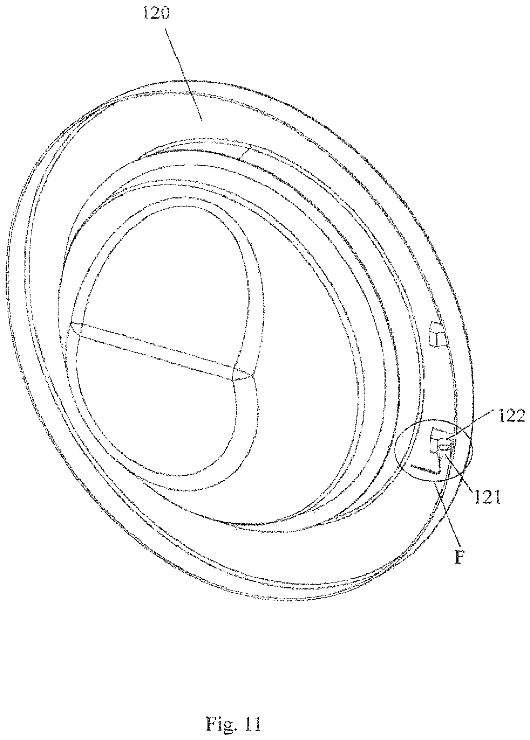

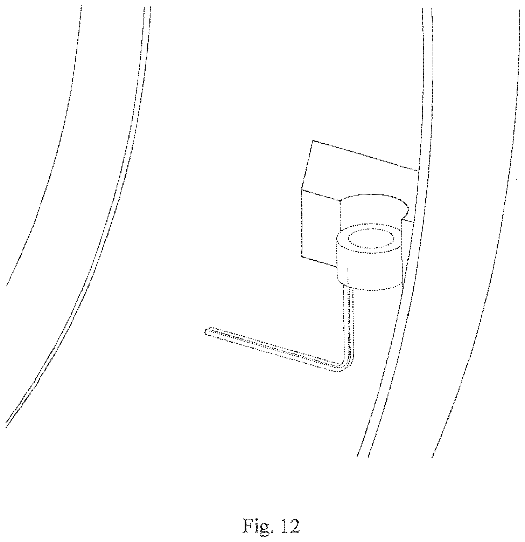

Fig. 9 is a perspective view of a main body of an electrical apparatus according to anther embodiment of the present disclosure; Fig. 10 is an enlarged view of a portion E as shown in Fig. 9; Fig. 11 is a perspective view of a pivotal part of the electrical apparatus according to the another embodiment of the present disclosure; and Fig. 12 is an enlarged view of a portion F as shown in Fig. 11.

Similar to the first embodiment, as shown in Figs. 9-12, in a non-claimed example, is provided an electrical apparatus, comprising: a main body 110, a pivotal part 120, a first coil 111 and a second coil 121. The first coil 111 at least partly passes through the second coil 121 to form electromagnetic coupling between the first coil 111 and the second coil 121, so that power is wirelessly supplied between the main body 110 and the pivot part 120.

Further, in an example not forming part of the invention, the electrical apparatus comprises a washing machine 2, and the pivotal part 120 is a washing machine door which is mounted on a main body of the washing machine by a hinge device 112. As shown in Figs. 9-12, in an illustrated non-claimed example, the first coil 111 is acted as a transmitter coil and is in a cylindrical shape, and the second coil 121 is acted as a receiver coil and is in a hollow cylindrical shape. The transmitter coil at least partially passes through the receiver coil, and the receiver coil is pivotally moved relative to the transmitter coil about a pivot axis of the hinge device 112. In this way, power may be wirelessly transmitted from the transmitter coil to the receiver coil, thereby realizing power transmission from the main body of the washing machine to the washing machine door. In an alternative, the first coil 111 and the second coil 121 may be configured to achieve signal transmission from the washing machine door to the main body of the washing machine.

As shown in Fig. 10, in an illustrated example not forming part of the invention, the hinge device 112 comprises: a base 113 mounted on the main body of the washing machine; a mounting portion 114 mounted on the base 113; and an insertion portion 115 fixed on the mounting portion 114, for example, at a free end of the mounting portion 114, the first coil 111 being arranged in the insertion portion 115. In the illustrated embodiment, the first coil 111 protrudes from the insertion portion 115. As shown in Fig. 12, a receiving groove(s) 122 is provided on the washing machine door, and the second coil 121 is arranged in the receiving groove 122. The insertion portion 115 of the hinge device 112 is inserted into the receiving groove 122, so that the first coil 111 at least partially passes through the second coil 121.

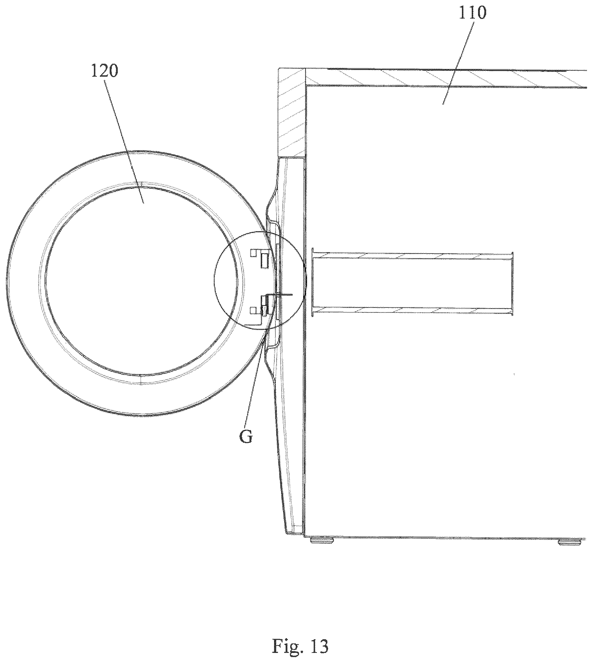

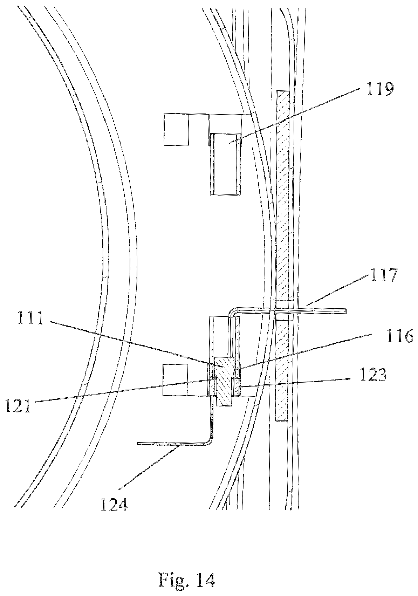

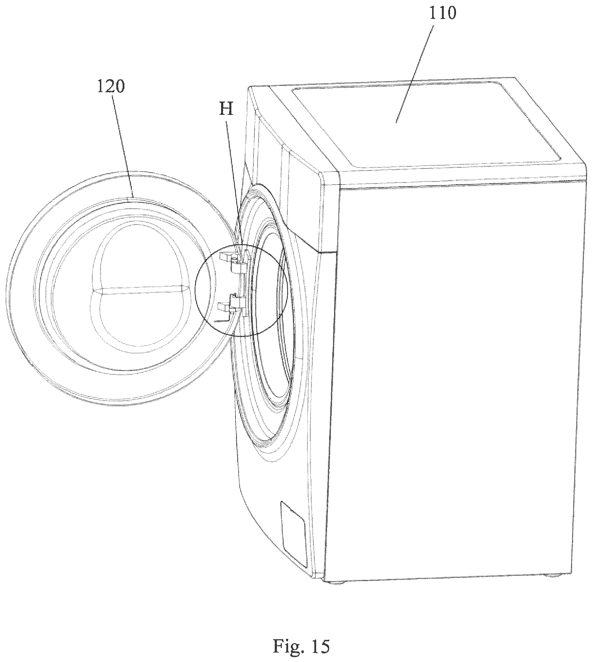

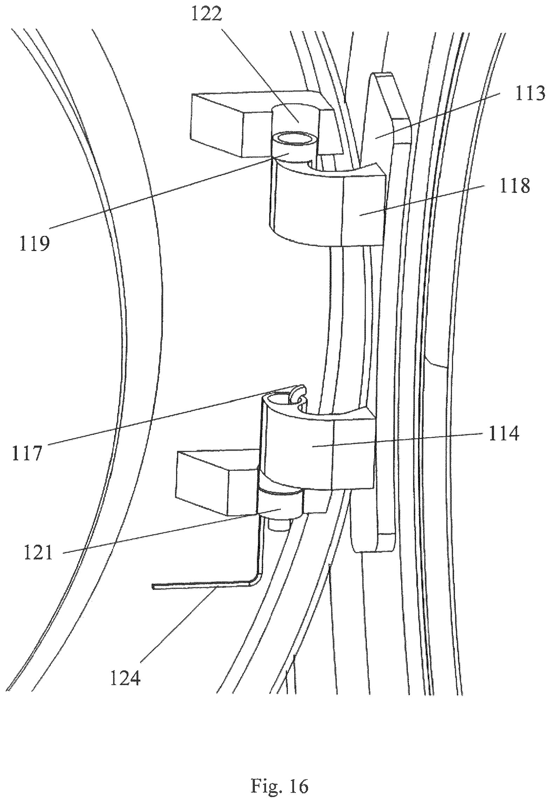

Fig. 13 is a perspective view of the electrical apparatus according to the non-claimed example as viewed from a direction, wherein the pivotal part as shown in Fig. 11 has been mounted on the main body as shown in Fig. 9; Fig. 14 is an enlarged view of a portion G as shown in Fig. 13; Fig. 15 is a perspective view of the electrical apparatus as shown in Fig. 13 as viewed from another direction; and Fig. 16 is an enlarged view of a portion H as shown in Fig. 15.

As shown in Fig. 10, the insertion portion 115 is constructed as a cylinder. As shown in Figs. 13-16, in an illustrated non-claimed example, the hinge device 112 further includes a plastic body 116, in which the first coil 111 is fixed, and the plastic body 116 is fixed in the cylinder, thereby fixing the first coil 111 in the insertion portion 115. The plastic body 116 may be made of a pouring sealant.

As shown in Figs. 9-16, in an illustrated non-claimed example, a bearing portion 123 is provided in the receiving groove 122. The second coil 121 is fixed to the bearing portion 123, thereby fixing the second coil 121 in the receiving groove 122. The second coil 121 is fixed by a double-sided adhesive tape.

As shown in Fig. 14, in an illustrated example not forming part of the invention, the hinge device 112 further includes an electric wire(s) 117 connected from the first coil 111 (or the transmitter coil) to a control system of the washing machine, which is located in the main body of the washing machine. In a non-claimed example, the transmitter coil is adapted to receive the power from the main body of the washing machine via the electric wire 117 to achieve wireless transmission of power from the transmitter coil to the receiver coil. In a further non-claimed example, the first coil 111 is adapted to receive a signal from a control system of the electrical apparatus via the electric wire 117 and transmit it to the second coil 121. In a further non-claimed example, the first coil 111 is adapted to transmit a signal received from the second coil 121 to the control system of the electrical apparatus via the electric wire 117.

As shown in Figs. 10, 14 and 16, in an illustrated example not forming part of the invention, the hinge device 112 further includes: a second mounting portion 118 mounted on the base 113 and opposite to the mounting portion 114; and a second insertion portion 119 fixed on the second mounting portion 118 and inserted into the receiving groove 122 in the washing machine door. In the exemplary embodiment, the mounting portion 114 is provided under the second mounting portion 118. In an alternative non-claimed example, the mounting portion 114 is provided above the second mounting portion 118.

When the washing machine door is mounted to the main body of the washing machine by the hinge device 112, a portion of the first coil 111 completely passes through the second coil 121, and the first coil 11 is overlapped with the second coil 21 at a position thereof in the pivot axis of the hinge device 112, thereby generating electromagnetic coupling therebetween. When the washing machine door is opened or closed, the second coil 121 pivots relative to the first coil 111, and a relative position of the first coil 111 and the second coil 121 in the pivot axis remains unchanged throughout the pivoting movement, so that the power may be supplied between the first coil 111 and the second coil 121 in a wireless manner. In an example not forming part of the invention, the power may be transmitted from the main body of the washing machine to the washing machine door, and then the power may be supplied to a load(s), such as a display device, on the washing machine door via an electric wire(s) 124 provided on the second coil 121.

Thus, in the electrical apparatus according to the embodiment of the present disclosure, by means of wireless power transmission, it is unnecessary to arrange the electrical wires in the hinge hole, thereby simplifying the assembly and disassembly process of the electrical apparatus. The number of the electricity consumption devices is not limited by the size of the hinge hole, significantly improving reliability of power supply.

It should be noted that term "comprising" or "including" should be understood as not excluding other elements or steps, and term "a" or "an" should be understood as not excluding plural elements or steps.

## Claims

1. An electrical apparatus comprising:
a main body (10);
a pivotal part (20) pivotally connected to the main body (10);
a first coil (11) mounted on the main body (10); and
a second coil (21) mounted on the pivotal part (20);
wherein the pivotal part (20) is mounted on the main body (10) by a hinge device (12);
wherein the first coil (11) at least partly passes through the second coil (21) to form electromagnetic coupling between the first coil and the second coil, so that power is wirelessly supplied between the main body and the pivotal part, and wherein a relative position of the first coil and the second coil in a pivot axis of the hinge device remains unchanged during a pivoting movement of the pivotal part, wherein the electrical apparatus comprises a refrigerator, and the pivotal part comprises a refrigerator door.

2. The electrical apparatus according to claim 1, wherein the hinge device (12) comprises:
a mounting portion (13) mounted on the main body (10); and
an insertion portion (14) fixed on the mounting portion, the first coil (11) being arranged in the insertion portion; and
wherein a receiving groove (22) is provided in the pivotal part, the second coil being arranged in the receiving groove, and the insertion portion being inserted into the receiving groove.

3. The electrical apparatus according to claim 2, wherein the insertion portion (14) is constructed as a cylinder, and
wherein the hinge device (12) further comprises a plastic body (15) fixed in the cylinder, the first coil being fixed in the plastic body.

4. The electrical apparatus according to claim 3, wherein a bearing portion (23) is provided in the receiving groove (22), the second coil (21) being fixed to the bearing portion.

5. The electrical apparatus according to claim 4, wherein the first coil (11) is acted as a transmitter coil, the second coil (21) is acted as a receiver coil, and electromagnetic coupling is formed between the first coil and the second coil, so that power is transmitted from the main body to the pivotal part.

6. The electrical apparatus according to claim 1, further comprising a supporting part (17) mounted at a position of the main body, which is engaged with a lower end of the pivotal part, and provided with a protrusion (18), the lower end of the pivotal part being provided with a mounting groove (25), and the protrusion being inserted into the mounting groove.

7. The electrical apparatus according to claim 1, wherein the first coil (11) is in a cylindrical shape and the second coil (21) is in a hollow cylindrical shape.

## Patentansprüche

1. Elektrisches Gerät, das umfasst:
einen Hauptkörper (10);
einen Schwenkteil (20), der schwenkbar mit dem Hauptkörper (10) verbunden ist;
eine erste Spule (11), die an dem Hauptkörper (10) angebracht ist; sowie eine zweite Spule (21), die an dem Schwenkteil (20) angebracht ist;
wobei der Schwenkteil (20) über eine Scharniervorrichtung (12) an dem Hauptkörper (10) angebracht ist;
die erste Spule (11) wenigstens teilweise durch die zweite Spule (21) hindurchtritt, um elektromagnetische Kopplung zwischen der ersten Spule und der zweiten Spule zu bewirken, so dass Energie drahtlos zwischen dem Hauptkörper und dem Schwenkteil zugeführt wird, eine relative Position der ersten Spule und der zweiten Spule auf einer Schwenkachse der Scharniervorrichtung während einer Schwenkbewegung des Schwenkteils unverändert bleibt, und das elektrische Gerät einen Kühlschrank umfasst und der Schwenkteil eine Kühlschranktür umfasst.

2. Elektrisches Gerät nach Anspruch 1, wobei die Scharniervorrichtung (12) umfasst:
einen Anbringungsabschnitt (13), der an dem Hauptkörper (10) angebracht ist; sowie
einen Einführungsabschnitt (14), der an dem Anbringungsabschnitt befestigt ist, wobei die erste Spule (11) in dem Einführungsabschnitt angeordnet ist; und
eine Aufnahmenut (22) in dem Schwenkteil vorhanden ist, die zweite Spule in der Aufnahmenut angeordnet ist und der Einführungsabschnitt in die Aufnahmenut eingeführt ist.

3. Elektrisches Gerät nach Anspruch 2, wobei der Einführungsabschnitt (14) als ein Zylinder konstruiert ist, und
die Scharniervorrichtung (12) des Weiteren einen plastischen Körper (15) umfasst, der in dem Zylinder befestigt ist, wobei die erste Spule in dem plastischen Körper befestigt ist.

4. Elektrisches Gerät nach Anspruch 3, wobei ein Lagerungsabschnitt (23) in der Aufnahmenut (22) vorhanden ist und die zweite Spule (21) an dem Lagerungsabschnitt befestigt ist.

5. Elektrisches Gerät nach Anspruch 4, wobei die erste Spule (11) als eine Senderspule arbeitet, die zweite Spule (21) als eine Empfängerspule arbeitet und elektromagnetische Kopplung zwischen der ersten Spule und der zweiten Spule besteht, so dass Energie von dem Hauptkörper zu dem Schwenkteil übertragen wird.

6. Elektrisches Gerät nach Anspruch 1, das des Weiteren einen Trageteil (17) umfasst, der an einer Position des Hauptkörpers angebracht ist, das mit einem unteren Ende des Schwenkteils in Eingriff ist und mit einem Vorsprung (18) versehen ist, wobei das untere Ende des Schwenkteils mit einer Montagenut (25) versehen ist und der Vorsprung in die Montagenut eingeführt ist.

7. Elektrisches Gerät nach Anspruch 1, wobei die erste Spule (11) eine zylindrische Form hat und die zweite Spule (21) eine hohlzylindrische Form hat.

## Revendications

1. Appareil électrique comprenant :
un corps principal (10),
un composant pivotant (100) raccordé au corps principal (10) tout en pouvant pivoter,
une première bobine (11) montée sur le corps principal (10) ,
une seconde bobine (21) montée sur le composant pivotant (20) ,
dans lequel le composant pivotant (20) est monté sur le corps principal (10) grâce à un dispositif formant articulation (12),
dans lequel la première bobine (11) traverse au moins partiellement la seconde bobine (21) pour former un couplage électromagnétique entre la première bobine et la seconde bobine de sorte à ce que de la puissance soit délivrée sans fil entre le corps principal et le composant, et où la position relative de la première bobine et de la seconde bobine selon un axe de pivot du dispositif formant articulation reste identique pendant un mouvement de pivotement du composant pivotant, l'appareil électrique comprenant un réfrigérateur et le composant pivotant comprenant une portière de réfrigérateur.

2. Appareil électrique selon la revendication 1, dans lequel le dispositif formant articulation (12) comprend :
un organe de montage (13) monté sur le corps principal (10), et
un organe d'insertion (14) fixé sur l'organe de montage, la première bobine (11) étant disposée dans l'organe d'insertion, et
dans lequel une rainure de réception (22) est prévue dans le composant pivotant, la seconde bobine étant placée dans la rainure de réception et l'organe d'insertion étant inséré dans la rainure de réception.

3. Appareil électrique selon la revendication 2, dans lequel l'organe d'insertion (14) est constitué comme un cylindre, et
dans lequel le dispositif formant articulation (12) comprend en outre un corps de matière plastique (15) fixé dans le cylindre, la première bobine étant fixée dans le corps de matière plastique.

4. Appareil électrique selon la revendication 3, dans lequel un organe de support (23) est disposé dans la rainure de réception (22), la seconde bobine (21) étant fixée à l'organe de support.

5. Appareil électrique selon la revendication 4, dans lequel la première bobine (11) agit comme une bobine émettrice, la seconde bobine (21) agit comme une bobine réceptrice et un couplage électromagnétique est formé entre la première bobine et la seconde bobine de sorte à ce que de la puissance soit transmise du corps principal au composant pivotant.

6. Appareil électrique selon la revendication 1, comprenant en outre un composant de support (17) monté à une certaine position du corps principal, lequel est en prise avec une extrémité inférieure du composant pivotant, et doté d'une protubérance (18), l'extrémité inférieure du composant pivotant étant dotée d'une rainure de montage (25) et la protubérance étant insérée dans la rainure de montage.

7. Appareil électrique selon la revendication 1, dans lequel la première bobine (11) présente une forme cylindrique et la seconde bobine (21) présente une forme cylindrique creuse.
